# EUROPÄISCHE PATENTSCHRIFT

(11) **EP 3 366 971 B1**
(45) Veröffentlichungstag und Bekanntmachung des Hinweises auf die Patenterteilung: **10.03.2021**
(21) Anmeldenummer: 18151140.3
(22) Anmeldetag: 11.01.2018
(51) Int. Cl.: C08K 7/28, F16L 59/02

(54) **ISOLIERSCHLAUCH, INSBESONDERE FÜR ROHRLEITUNGEN, SEIN HERSTELLVERFAHREN**
INSULATING SLEEVE, IN PARTICULAR FOR PIPELINES, ITS PRODUCTION METHOD
TUYAU ISOLANT, EN PARTICULIER POUR TUYAUTERIE, SON PROCÉDÉ DE FABRICATION

(30) Priorität: 27.02.2017 DE 102017203154
(43) Veröffentlichungstag der Anmeldung: 29.08.2018
(73) Patentinhaber: ContiTech Elastomer-Beschichtungen GmbH, 30165 Hannover (DE)
(72) Erfinder: Janiszewski, Tomasz, 37083 Göttingen (DE); Storre, Jens, 37176 Nörten-Hardenberg (DE); Fleck, Andreas, 30827 Garbsen (DE); Meissner, Ronny, 30851 Langenhagen (DE)
(74) Vertreter: Continental Corporation

(56) Entgegenhaltungen:
- EP-A1- 1 398 561
- EP-A1- 2 573 443
- EP-A1- 2 842 992
- WO-A1-2011/047923
- DE-A1-102009 039 454

## Beschreibung

Die Erfindung betrifft einen Isolierschlauch, insbesondere zur thermischen und / oder akustischen Isolierung von Rohrleitungen und flexiblen Schläuchen.

Isolierschläuche zur elektrischen Isolierung sind bereits hinreichend bekannt. Sie werden in der Regel zur elektrischen Isolierung von leitenden Metalldrähten für Kabel o.ä. verwendet, sie bspw. DE102009039454A1.
Ebenso sind bereits Isolierschläuche für Rohrleitungen bekannt, die meist mehrlagig aufgebaut sind, siehe DE102006052010A1, und eine Schaumschicht, bspw. PU-Schaum in DE1836851U oder eine Kombination aus Schaumstoff und Kunststoffvlies in DE9420319U1, enthalten. Als Kunststoffe findet in der Regel PVC Verwendung.

Nachteilig bei den bekannten Isolierschläuchen ist die mangelnde Stabilität bei längerer Benutzung unter höheren Temperaturen, z. Bsp. oberhalb 130°C. Bei höheren Temperaturen werden Isolierschläuche auf der Basis von bspw. PU, NBR oder EPDM mit der Zeit spröde. Dies ist oft von außen nicht gleich zu erkennen. Die Isolierwirkung geht verloren und das Material verliert seine Festigkeit. Bei Berührung des Materials fällt es in sich zusammen. Dies ist insbesondere bei der Isolierung von flexiblen Schläuchen kritisch, bei der durch die Bewegung des Schlauches die Isolierung bei Versprödung dann einfach abfällt. Gleichzeitig sind einige Isolierschläuche, insbesondere solche aus PU, sehr weich und mit dem Fingernagel aufkratzbar. Sie reißen bei Stößen zudem schnell auf. Gleichzeitig bedeuten die mehrlagigen Isolierschläuche einen vergleichsweise hohen Produktionsaufwand.

Der Erfindung liegt daher die Aufgabe zu Grunde, einen Isolierschlauch bereitzustellen, der sich durch eine verbesserte Stabilität, d.h. Lebensdauer bei Temperaturen von mehr als 150°C, auszeichnet. Der Isolierschlauch soll sich im Produktionsmaßstab einfach herstellen lassen
WO 2011/047923 A1 offenbart ein Flächenprodukt: Bahnen aus Silikongummi mit Mikrokugeln, die kalandriert werden.

Gelöst wird diese Aufgabe erfindungsgemäß durch ein Isolierschlauch gemäss Anspruch 1 und ein Verfahren gemäss Anspruch 4.

Erfindungsgemäß ist der einlagige Isolierschlauch aus einer Kautschukmischung aufgebaut, die wenigstens einen Silikonkautschuk als einzige Kautschukkomponente enthält. Hierbei können alle der fachkundigen Person bekannten Silikonkautschuke verwendet werden. Möglich sind bspw. Silikonkautschuke, die auch als Poly(organo)siloxane bezeichnet werden. Sie weisen für Vernetzungsreaktionen zugängige Gruppen auf, wobei es sich vorwiegend, aber nicht ausschließlich, um Wasserstoffatome, Hydroxygruppen und Vinylgruppen handelt, welche sich jeweils in der Kette oder an den Kettenenden befinden können.

Es gibt kaltvernetzende Silikonkautschuke (RTV = Raumtemperatur vernetzend) und heißvernetzende Silikonkautschuke (HTV = Hochtemperatur vernetzend).

Bei den RTV-Silikonkautschuken lassen sich Ein- und Zweikomponentensysteme unterscheiden. Der Silikonkautschuk kann auch als Vormischung aus Polymer, Füllstoff und Öl, wie auf dem Markt üblich, eingesetzt werden.

Insbesondere zur Einstellung der Viskosität enthält die Kautschukmischung zusätzlich noch wenigstens einen Weichmacher. Hierbei können alle der fachkundigen Person bekannten Weichmacher verwendet werden, die kompatibel mit dem jeweiligen Silikonkautschuk sind. Insbesondere die Verwendung von Silikonöl hat sich hierbei als vorteilhaft erwiesen, da dies gut mit dem Silikonkautschuk verträglich ist. Besonders gut geeignet haben sich einvernetzende Silikonöle gezeigt, die sich an der Vernetzung der Kautschukmischung beteiligen und häufig als vernetzbare Silikonöle bezeichnet werden. Diese führen zu einer weiteren deutlichen Reduzierung eines möglichen Ausschwitzens von Weichmachern, wie es bei den Isolierschläuchen aus dem Stand der Technik bisweilen beobachtet werden kann.

Durch die bereits vollständige Vulkanisation des Isolierschlauches ist eine Nachbehandlung, d.h. eine thermische Behandlung nach dem Aufbringen auf ein Rohr oder eine Rohrleitung, nicht mehr notwendig. Die Handhabung und die Installationszeit werden somit deutlich verkürzt.

Um die thermischen oder auch akustischen Isolationseigenschaften zu verbessern, weist die Kautschukmischung eine Porenstruktur auf. Diese Porenstruktur erfolgt durch den Einsatz von Mikrohohlkugeln, die in die Kautschukmischung eingemischt sind. Bei den Mikrohohlkugeln, oft auch einfach als Mikrokugeln bezeichnet, handelt es sich um hohle Kugeln (Mikrosphären) mit einem Durchmesser im µm-Bereich aus Glas, Phenolharz, Kohlenstoff oder thermoplastischem Kunststoffmaterial. Es gibt es sie in expandierbarer Form, wobei sie mit einem Treibmittel gefüllt sind und sich beim Erwärmen ausdehnen, oder in vorexpandierter Form, bei der die Ausdehnung schon abgeschlossen ist.

Bevorzugt enthält die Kautschukmischung 2 bis 200 phr Mikrokugeln, besonders bevorzugt 2 bis 30 phr, ganz besonders bevorzugt 2 bis 15 phr bereits expandierte Mikrokugeln aus thermoplastischen Material, so dass die Kautschukmischung bereits vor der dem Aufbau des Isolierschlauches bzw. vor der Vernetzung eine Porenstruktur aufweist.
Mikrokugeln bieten den Vorteil der Bildung einer geschlossenen Porenstruktur, die für Isolationszwecke wegen geringerer Konvektion in den Poren besser geeignet ist. Je höher die Menge an expandierten Mikrokugeln, desto besser wird durch den höheren Porenanteil die Isolationswirkung. Bei zu großen Mengen an Mikrokugeln können sich jedoch verarbeitungstechnische Probleme bei der Mischungsherstellung oder -verarbeitung ergeben. Der Isolierschlauchverliert an Festigkeit, was beim Aufbringen auf die Rohrleitung von Nachteil ist.

Gemäß einer alternativen Ausführungsform enthält die Kautschukmischung 10 bis 200 phr Mikrokugeln aus Glas. Mit dieser Variante lässt sich ein Isolierschlauch mit höherer Standfestigkeit und geringerer Kompressibilität erhalten, da sich Mikrokugeln aus Glas im Gegensatz zu Mikrokugeln aus thermoplastischem Material nicht komprimieren lassen.

Des Weiteren kann die Kautschukmischung neben den üblichen Füllstoffen noch zusätzliche Pigmente enthalten. Mit diesen Pigmenten ist es möglich, das Isolationsmaterial individuell nach Kundenwunsch einzufärben. So können bspw. thermochromische Pigmente verwendet werden, die sich bei einer definierten Temperatur oder innerhalb eines bestimmten Temperaturbereiches verfärben. Hiermit können zum Beispiel Überheizungen angezeigt werden. Oder aber es können lasermarkierbare Pigmente verwendet werden, wie sie bspw. aus DE102009044718A1 bekannt sind. Zur besseren Ableitung von elektrischen Spannungen kann die Kautschukmischung zusätzlich leitfähige Additive wie leitfähige Ruße und / oder Kohlenstoffnanoröhren (CNT, engl. carbon nano tubes) enthalten.

Zur Verbesserung des Flammschutzes enthält die Kautschukmischung vorteilhafterweise wenigstens ein Flammschutzmittel. Als Flammschutzmittel können alle der fachkundigen Person bekannten Flammschutzmittel verwendet werden. Aufgrund aktueller gesetzlicher Vorgaben ist es allerdings bevorzugt, wenn das verwendete Flammschutzmittel frei von Halogen und Antimontrioxid ist. Es kommen hierbei insbesondere Stannate, wie Zinkstannat oder Zinkhydroxystannat, Hydroxide, wie Magnesiumhydroxid oder Aluminiumhydroxid, Cyanurate, wie Melamincyanurat, Borate, wie Zinkborat, phosphorhaltige Komponenten, wie Resorcinoldiphosphat oder aromatische Polyphosphate, stickstoffhaltige Komponenten, wie Ammoniumphosphat, Carbonate, wie Calciumcarbonat oder Magnesiumcarbonat, oder Blähgraphit in Frage. Als besonders gut geeignet haben sich Stannate, insbesondere Zinkhydroxystannat (ZHS), gezeigt. ZHS ist besonders ungefährlich für den Menschen, so dass keine besonderen Sicherheitsmaßnahmen erforderlich sind. Ferner sind bereits vorgemischte Zubereitungen unterschiedlicher Flammschutzmittel einsetzbar, die handelsüblich erhältlich sind.

Der Isolierschlauch kann wird über das zu isolierende Rohr bzw. die zu isolierende Rohrleitung aufgesteckt oder übergezogen. Dies kann ohne eine zusätzliche Luftschicht zwischen Rohrleitung und Isolierschlauch oder aber mit einer zusätzlichen Luftschicht erfolgen. Letzteres bedeutet, dass sich zwischen dem zu isolierenden Rohr bzw. der zu isolierende Rohrleitung ein Hohlraum befindet, der zu einer zusätzlichen Isolierwirkung beiträgt.

Um das Aufbringen des Isolierschlauches zu verbessern, kann dieser in einer vorteilhaften Ausgestaltung einen tangentialen Schnitt, d.h. einen in Längsrichtung des Schlauches durchgängigen Schnitt, enthalten. Hierdurch kann der Isolierschlauch während des Aufbringens kurzzeitig aufgeklappt werden. Hierdurchkann ein weiterer direkter Durchgang der Wärme während der Isolation verhindert werden.
Es ist aber auch möglich den Schnitt zu verkleben und / oder diesen mit z. Bsp. Kabelbindern oder Klemmen zusammen zu pressen.

In einer bevorzugten Ausführungsform hat der Isolierschlauch einen Innendurchmesser von 10 bis 80 mm, besonders bevorzugt von 10 bis 50 mm, ganz besonderes bevorzugt von 30 bis 40 mm.
Die Wanddicke des Isolierschlauches kann hierbei variieren. Bevorzugt beträgt die Wanddicke 2 bis 40 mm, besonders bevorzugt 3 bis 20 mm, ganz besonders bevorzugt 3 bis 16 mm.

Zur Herstellung des Isolierschlauches werden bevorzugt wenigstens folgende Verfahrensschritte verwendet:
- Herstellung der Kautschukmischung in einem ersten Verfahrensschritt und
- Extrusion der Kautschukmischung auf einem Dorn in wenigstens einem weiteren Verfahrensschritt und
- Vollständige Vulkanisation des Isolierschlauches in einem abschließenden Verfahrensschritt.

Die Vulkanisation findet dabei bevorzugt in einem Vulkanisationskanal mittels Heißluft oder Infrarot statt.

## Patentansprüche

1. Isolierschlauch, der flexibel ist und aus einer einzigen Lage besteht, wobei die einzige Lage aus einer Kautschukmischung aufgebaut ist, welche wenigstens einen Silikonkautschuk als einzige Kautschukkomponente und Mikrohohlkugeln enthält und wobei die Kautschukmischung vollständig vulkanisiert ist und wobei der Isolierschlauch einen tangentialen Schnitt enthält.

2. Isolierschlauch nach Anspruch 1, der einen Innendurchmesser von 10 bis 80 mm besitzt.

3. Isolierschlauch nach einem der Ansprüche 1 bis 2, der einen Wanddicke von 2 bis 40 mm besitzt.

4. Verfahren zur Herstellung eines Isolierschlauchs nach einem der Ansprüche 1 bis 3, umfassend wenigstens folgende Verfahrensschritte:
- Herstellung der Kautschukmischung in einem ersten Verfahrensschritt und
- Extrusion der Kautschukmischung auf einem Dorn in wenigstens einem weiteren Verfahrensschritt und
- Vollständige Vulkanisation des Isolierschlauches in einem abschließenden Verfahrensschritt.

## Claims

1. Insulating sleeve which is flexible and consists of a single layer, wherein the single layer is based on a rubber mixture which contains at least one silicone rubber as single rubber component and hollow microspheres, and wherein the rubber mixture is completely vulcanized and wherein the insulating sleeve contains a tangential cut.

2. Insulating sleeve according to Claim 1, which has an internal diameter of 10 to 80 mm.

3. Insulating sleeve according to one of Claims 1 and 2, which has a wall thickness of from 2 to 40 mm.

4. Method for producing an insulating sleeve according to one of Claims 1 to 3, comprising at least the following method steps:
- producing the rubber mixture in a first method step and
- extruding the rubber mixture on a mandrel in at least one further method step and
- completely vulcanizing the insulating sleeve in a final method step.

## Revendications

1. Tuyau isolant qui est flexible et est constitué d'une unique couche, l'unique couche étant construite à partir d'un mélange de caoutchouc qui contient au moins un caoutchouc de silicone en tant qu'unique composant de caoutchouc et des microsphères creuses et le mélange de caoutchouc étant totalement vulcanisé et le tuyau isolant contenant une coupe tangentielle.

2. Tuyau isolant selon la revendication 1, qui possède un diamètre intérieur de 10 à 80 mm.

3. Tuyau isolant selon l'une quelconque des revendications 1 et 2, qui possède une épaisseur de paroi de 2 à 40 mm.

4. Procédé pour la préparation d'un tuyau isolant selon l'une quelconque des revendications 1 à 3, comprenant au moins les étapes de procédé suivantes :
- préparation du mélange de caoutchouc dans une première étape de procédé et
- extrusion du mélange de caoutchouc sur un mandrin dans au moins une autre étape de procédé et
- vulcanisation totale du tuyau isolant dans une étape de procédé finale.
